# EUROPEAN PATENT APPLICATION

(11) **EP 2 034 468 A1**
(43) Date of publication of application: **11.03.2009**
(21) Application number: 07115729.1
(22) Date of filing: 05.09.2007
(51) Int. Cl.: G09B 9/00, G06Q 50/00

(54) **Method for assessing the performance of a motion simulator and performance indicator obtained with such method**

(71) Applicant: Nederlandse Organisatie voor Toegepast- Natuurwetenschappelijk Onderzoek TNO, 2628 VK Delft (NL)
(72) Inventor: Groen, Eric Lysander, 3769 DE Soesterberg (NL)
(74) Representative: Hatzmann, Martin

(57) **Abstract**

The invention relates to a method for assessing the performance of a motion simulator. The method comprises the steps:
(a) select a performance criterion;
(b) determine a weighing function, representing the sensitivity of an average user for the performance criterion selected in step (a) as function of motion frequency;
(c) have the motion simulator simulate a motion test signal;
(d) compare the simulated motion produced by the simulator during step (c) with the motion test signal, so as to obtain a deviation signal;
(e) multiply this deviation signal with the weighing function of step (b); and
(f) compute the area underneath the signal obtained from step (e) so as to obtain a performance indicator.

The invention furthermore relates to a performance indicator obtained with a method according to the invention.

## Description

The invention relates to a method for assessing the performance of a motion simulator for vehicles, such as cars, trucks, tanks, ships, aeroplanes or the like.

Such simulators generally comprise visual simulation means. They may further comprise a moving base, to accompany the visual information with actual motions. The visual simulation means and the moving base may be controlled on the basis of a mathematical model of the vehicle to be simulated. With such model it is possible to calculate the vehicle's response in reaction to an input of a user or some other input, such as for instance varying road conditions or weather conditions. Generally, the simulator will not be able to exactly reproduce said calculated responses, due to for instance computational and/or mechanical limitations, such as time delays, data limits, inertia and/or displacement limits. Consequently, the simulated response may deviate from the computed response (which represents the actual vehicle's response). This deviation may have several disadvantageous effects. For instance, it may cause the simulation to be perceived as unrealistic. When used for training purposes, it may cause a trainee to acquire faulty operating skills, i.e. operating skills that are inadequate when driving the real vehicle. It may even cause a user to become motion sick, a phenomenon which is known as 'simulator sickness'.

Given the aforementioned disadvantages, it is important to be able to assess a simulator's performance. More particularly, it is important to assess whether a given simulator is suitable for a specific simulation task, such as the simulation of a specific vehicle, a specific motion (for instance a sharp turn) and/or a specific situation (bumpy road, flat tire, stormy weather, etc.). At present, such assessment is done by having an experienced operator test the simulator. Based on his feedback, certain simulator settings may be adjusted to improve the performance, where necessary.

A disadvantage of this known assessment method is that it is highly subjective. The outcome may differ depending on the operator, his experience and/or the way in which his feedback is interpreted into adjusting the simulator settings. Also, because of his experience, the operator's assessment may not be representative for the intended users of the simulator. These users may be more or less sensitive for particular simulator deviations than the professional assessor. Consequently, a simulator that has been assessed as having a good performance may turn out to be less suitable for its task during actual use.

The present invention aims to provide an improved method for assessing the performance of a motion simulator. To that end, a method according to the invention is characterized by the features of claim 1.

The invention is based on the insight that simulator users, or people in general, are more sensitive for some motion frequencies than for others. Consequently, a deviation between the computed response and the simulated response may affect the simulator performance more seriously when this deviation occurs at or near a 'sensitive' motion frequency, i.e. a minor deviation near a sensitive frequency may have a bigger influence than a large deviation near a non sensitive frequency.

In a method according to the invention, this frequency dependent sensitivity is taken into account by using one or more weighing functions to asses the simulator performance. These weighing functions contain quantified information regarding the average sensitivity of a number of people for specific simulator deviations. To that end the test persons have been subjected to deviations, similar to the ones encountered in the simulators, but of which the frequency content was varied over a broad frequency range, in a predetermined, preferably standardized, manner.

With the method according to the invention, the simulator is made to simulate a test signal, which is preferably standardized and preferably designed to have the simulator cover a wide range of frequencies. The simulated output motion is then compared to what it should have been according to the mathematical model provided in the simulator. This results in a deviation signal. This deviation signal is then multiplied by the appropriate weighing function as described above. This will cause deviations at sensitive frequencies to be magnified and deviations at non sensitive frequencies to be suppressed. Next, the surface under the resulting signal is computed. This provides a single value, which hereinafter will be referred to as the 'performance indicator'. This performance indicator is a measure for the performance of the simulator. Its value may for instance be linked to a normative score (poor, acceptable, good performance) or a scale, ranging from for instance 1 to 10, wherein 1 may correspond to a poor performance and 10 may correspond to an excellent performance. This linking to a score or scale may be based on further measurements and/or empirical data. It is for instance possible to collect feedback information from the various subsequent users of the simulator. Such feedback information may include the users' personal opinion regarding the simulator performance. It may further or alternatively include measured data indicative for said performance, such as the percentage of users becoming sick when using the simulator (where the performance criterion is motion sickness), or any measurable operating errors made by the user when performing a certain operating task on the simulator (in case where the performance criterion is for instance operating fidelity). This operating task may be standardized tasks, specially designed for this purpose. The feedback information thus obtained can be stored in a data base, together with the performance indicator, and possibly together with details regarding the simulator type. These data can then serve for future use, to validate the performance indicators of similar or comparable simulators.

The method according to the invention thus offers the advantage that it takes into account the frequency dependent sensitivity of an average user. This renders the assessment more objective and reliable than an assessment performed by conventional methods, relying on the opinion of a single professional assessor. The use of weighing functions furthermore allows the respective assessment steps to be processed numerically, thereby allowing the method according to the invention to be carried out in an objective, foolproof, repeatable way.

Depending on the value of the performance indicator, it may be decided to use the simulator for certain simulation tasks only. Alternatively, it may be decided to improve the simulator's performance. In the latter case, the assessment method according to the invention may be used, if necessary repeatedly, to evaluate the effect of any improvement action.

According to one aspect of the invention, the simulator may be assessed for various performance criteria, such as its likeliness to cause motion sickness, the perceived realness of the simulated motions (motion fidelity) or its ability to provide for a realistic training environment (training fidelity). A weighing function may be determined for each criterion. This may be done by subjecting a group of test persons to a series of deviations, similar to the ones that may occur in the simulator, and preferably covering a wide range of frequencies. Such tests can be done in a lab environment, on a special test setup. Alternatively, the weighing functions may be determined on the simulator itself, by manipulating said simulator into producing deviations with a certain amplitude and frequency content.

The deviation signal determined during the assessment method according to the invention may cover mismatches between the actual simulated motion and the intended motion (as computed by the mathematical model) only. Alternatively, said deviation signal may include other factors that in practice can affect the simulator's performance, such as for instance a mismatch between the actual simulated motion and the simulated visual information and/or deficiencies in the operator interface, for instance in the force feedback of the steering means, accelerator means, breaking means, etc.. The effects of these other factors can be included in the weighing functions, by determining the weighing function on the simulators that are to be assessed or are similar thereto, as will be explained below in further detail. In such case, said effects will be accounted for in the overall assessment method.

According to a further aspect of the invention, the accuracy of the weighing functions may be improved by repeating the tests and/or by increasing the number of test persons. Accordingly, subjective particularities in the individual weighing functions can be averaged out. Furthermore, the test persons may be selected be representative for future users of the simulator.

A further advantage of a method according to the invention is that the assessment knowledge gained with the weighing functions can be used for other purposes, for instance for drafting suitable dynamic specifications when designing a new simulator. It may also help to analyse why a particular simulator performs poorly and provide understanding as to how the performance can be enhanced. To that end it is possible to capture the transfer function of the simulator, between its input (the desired motion) and its output (the actual simulated motion). If this transfer function features peaks near frequencies that are known to be sensitive from the weighing function, the simulator settings may be adjusted so as to reduce the magnitude of said peaks and/or to shift said peaks away, towards less sensitive frequencies. The information contained in the weighing functions may furthermore be used to decide whether a particular type of simulator is capable of performing a particular simulation task. Some simulators may for instance be suitable for simulating traveling paths at constant speed only, while others may be suitable for simulating traveling paths containing linear accelerations that may be associated with variations in speed or with turns.

The invention furthermore relates to a performance indicator obtained with a method according to the invention.

With such performance indicator it is possible to objectively rate the performance of motion simulators, in a repeatable, reliable and comparable way. Preferably, the performance indicators are stored in a database, which can for instance be used to calibrate future performance indicators, as described above, so as to establish whether the simulator performance is good, reasonable or inadequate.

Further advantageous embodiments of a method and a performance indicator according to the present invention are set forth in the dependent claims.

To explain the invention, an exemplary embodiment thereof will hereinafter be described with reference to the accompanying drawings, wherein:
FIG. 1 shows a block diagram of an embodiment of a motion simulator according to the invention; and
FIG. 2 shows a block diagram of the setup for determining a performance indicator according to the invention.

In this description, the term 'simulator performance' is used to qualify a simulator's ability to simulate specific simulation tasks, such as the simulation of a specific vehicle, a specific motion and/or a specific situation. This ability can be assessed in relation to various performance criteria, such as the perceived realness of the simulated motions (motion fidelity), the sickening effect of the simulator (motion sickness) and/or the realness of the steering behaviour of the simulator (training fidelity). The method according to the invention and the performance indicator obtained therewith, can be used for any type of motion simulator (e.g. a fixed based simulator, a hexapod, a XY- table or a centrifuge-like simulator), for simulating any type of vehicle (for use on land, air, water, or space), for any purpose, such as training, research and/or a recreation.

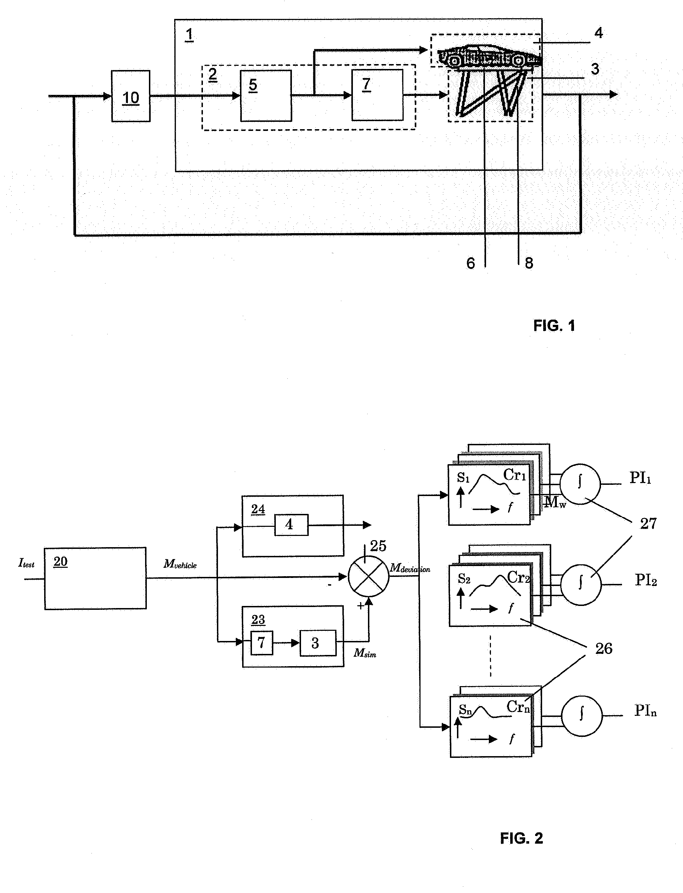

Figure 1 shows a block diagram, representing a simulation loop with a simulator 1 that is operated by an operator 10. The simulator 1 comprises a control unit 2, a motion simulation unit 3 and a visual simulation unit 4.

The motion simulation unit 3, in the illustrated embodiment, includes a moving base 6 and at least one actuator 8, arranged to move the base 6 in at least one direction. In an alternative embodiment, the moving base 6 may include several actuators 8, for moving the base 6 in several directions, preferably in all three linear and all three rotational directions. Alternatively, the base 6 may be a fixed base. The base 6 may comprise an operator interface 9, allowing the operator 10 to interact with the simulator 1, i.e. to provide the simulator 1 with input signals. The operator interface 9 may for instance comprise steering means, breaking means, accelerator means, etc.

The visual simulation unit 4 may comprise one or more displays for providing the operator 10 with simulated visual information, such as the changing surroundings as seen through a window of the simulated vehicle, a view as seen in a rearview mirror or wing mirror of the simulated vehicle and/or operator information, such as normally seen on a dashboard of the vehicle that is simulated, such as for instance the current speed, altitude, fuel level, GPS information, or the like.

The visual simulation unit 4 and the operator interface 9 may be at least partly integrated into a single unit, which may be construed to resemble a cabin or cockpit of the vehicle to be simulated.

The control unit 2 comprises a memory (not shown), computing means 5 and filter means 7. The memory can store a mathematical model of the dynamic behaviour of a vehicle to be simulated, e.g. a car, truck, tank, bus, aeroplane or helicopter. With help of this mathematical model, the computing means 5 can compute how an actual vehicle would respond to the input signals of the operator 10, e.g. a steering command or an acceleration command. The mathematical model may furthermore take into account other external stimuli such as weather conditions (e.g. gusts of wind), road conditions (bumpy, slippery and/or steep road). The computed response may subsequently be provided to the visual simulation unit 4 which will then produce the desired visual information. The computed response may furthermore be provided to the motion simulation unit 3 which will then produce the desired motion. Before providing the response signal to the motion simulation unit 3, the signal is preferably passed along the filter means 7. These means 7 are designed to adapt the computed signal to the physical and/or dynamic limitations of the motion simulation unit 3. For instance, if the computed response requires the motion simulator unit 3 to produce a displacement which is larger than the maximum stroke of the actuator(s), said computed response may be adapted, in that the large displacement is replaced by another dynamic signal that can be performed by the simulator and that is intended to induce in the operator 10 more or less the same perception as the large displacement would have achieved.

Figure 2 schematically visualizes the respective steps of a method according to the invention, for assessing the performance of the simulator 1 in Figure 1. Block 20 represents the earlier described mathematical model with which the actual vehicle response M_{vehicle} can be calculated upon an input I. Here, the input is a special test signal Iₜₑₛₜ, which preferably is designed to excite the simulator 1 over a wide range of frequencies when simulating said test signal Iₜₑₛₜ. The computed actual vehicle response M_{vehicle} is sent to block 23 and block 24. Block 23 represents the motion simulation unit 3 and the filtering means 7 and block 24 represents the visual simulation unit 4. Due to the filtering means 7 and the dynamic limitations of the motion simulation unit 3 the simulated motion Mₛᵢₘ will deviate from the desired vehicle signal M_{vehicle}. This deviation M_{deviation} is determined in block 25. The deviation signal M_{deviation} may subsequently be converted to the frequency domain (if not already in the frequency domain) and be multiplied with at least one weighing function, as illustrated in blocks 26. These weighing functions represent the frequency dependent sensitivity S_{1, 2, ..,n} of an average user for a particular performance criterion Cr_{1,..,n}. Such weighing function may for instance have a bell shaped appearance, featuring a maximum sensitivity Sₘₐₓ for a particular frequency or frequency range. By multiplying the deviation signal M_{deviation} with such weighing function, the deviations occurring at the frequency range for which the sensitivity is maximal, will be amplified, while the deviations occurring at less sensitive frequencies will be reduced, resulting in a frequency weighted deviation signal M_{w}. The surface underneath this signal M_{w} is a measure for the performance of the simulator 1. This surface can be calculated via integrating means 27, resulting in a single value, i.e. a performance indicator PI_{1,..,n}. Generally, the simulator's performance will be better, as the PI-value is lower.

The meaning or relevance of a particular PI-value can be established empirically. This may for instance be done by applying the present method on existing simulators, with a proven track record, so as to assess their PI-value. This provides information as to what PI-values correspond to a good or satisfactory performance. It is also possible to assess the PI of new simulators and subsequently monitor how these simulators perform in practice. Such monitoring may for instance involve asking the users for feedback. It may also involve measurements to find out how well the users can perform certain simulation tasks on the simulator. The resulting judgement regarding the simulator's performance can subsequently be linked to the previously determined PI-value.

Preferably, these PI data are recorded in a database, so that eventually an accurate overview is obtained of the relevance of the PI-values. Of course, various PI data bases may be established, each dedicated to a particular type of simulator, such as for instance land vehicle simulators, air vehicle simulators or sea vehicle simulators. The or each data base may be accessible by simulator manufacturers and may be managed by one party, for instance a performance assessment agency.

To render the PI-results of subsequent assessment sessions comparable with one another, it is preferred to standardize the various steps of the method as much as possible. In particularly, it is preferred to use a standard test signal Iₜₑₛₜ which may for instance be composed of standardized test situations such as a roundabout with various diameters, a slalom, certain acceleration and/or deceleration tests, etc. In addition, as mentioned above, the test signal Iₜₑₛₜ is preferably designed to test the simulator over a broad range of frequencies.

The weighing functions (as shown in block 26) can be determined in different ways, depending on the selected performance criterion.

For instance, if the performance criterion is motion sickness, a number of test persons may be subjected to a series of motions with varying amplitude, frequency and/or orientation. The test persons' sensitivity for motion sickness may be determined by having said persons indicate when (i.e. after how much time of being exposed to the motion) and/or to what extent they experience disorientation, dizziness, nausea or the like motion sickness related symptoms. Alternatively or additionally, physical motion sickness related symptoms may be measured, such as eyestrain, skin temperature, heart rate, or the like. These above tests can be carried out in a test environment with a special test setup. Alternatively, they may be carried out on a simulator, preferably one that is capable of performing a broad range of motions. Alternatively, the tests can be carried out on the very simulator, the performance of which is to be assessed.

If the performance criterion is motion fidelity, the use of a simulator 1 is recommended. The simulator 1 may be manipulated to produce a simulated motion Mₛᵢₘ that purposely deviates from the calculated vehicle motion M_{vehicle} so as to produce a deviation signal M_{deviation} with a varying amplitude, frequency and/or orientation. Meanwhile, the simulated visual information (output of block 24) is made to match the calculated vehicle motion M_{vehicle} as closely as possible. The test persons are subjected to the deviation signal M_{deviation} and the simulated visual information and requested to rate the fidelity of the experienced motions, for instance on a scale from 1 to 10, with 1 being very unreal and 10 being very real.

If the performance criterion concerns the operating or training fidelity, the test persons may be subjected to the same deviation signal M_{deviation} and simulated visual information as used for the motion fidelity criterion. The test persons may be requested to perform a specific control task, for instance to follow as closely as possible a track, presented to them by the simulated visual information. Their sensitivity for the operating fidelity may for instance be deduced from the measured deviation from this track and/or from their control input, such as for instance a steering stroke, steering angle, and/or from their response time.

Other weighing functions for other performance criteria can be determined in a similar way. It is also possible to determine a weighing function per degree of freedom (i.e. in three linear directions, X,Y,Z and/or three rotational directions around the respective X,Y and Z-axis). These weighing functions can be combined into a single weighing function using known mathematical techniques, such as taking the root square from the sum from the squared weighing functions. This combined weighing function can subsequently be used in the subsequent steps of the method according to the invention, in a similar fashion as described above.

Alternatively, the deviation signal M_{deviation} may be determined per degree of freedom as well, multiplied with the corresponding weighing function and integrated, in analogy with the method steps described for Figure 2. The resulting performance values for the respective degrees of freedom can then be combined into a single Performance Indicator in the way as described above, i.e. by squaring and subsequently summing the values, and by taking the square root of said sum.

Depending on the outcome of the performance assessment, one may decide to improve the simulator's performance by changing the settings of the filter 7. Alternatively, the intended purpose of the simulator 1 may be changed. It may for instance be decided that a fixed-base driving simulator is unsuitable for training ambulance drivers or firemen how to drive with warning signals at high speeds, because this involves vigorous motions that really require a moving base to give the right feel and prevent simulator sickness. The performance indicator information gathered over time may further be used to change the configuration of a motion simulator in a design phase, given the intended motion types to be simulated and the dynamics and mechanical limitations of a moving base.

The invention is not in any way limited to the exemplary embodiments presented in the description and drawing. All combinations (of parts) of the embodiments shown and described are explicitly understood to be incorporated within this description and are explicitly understood to fall within the scope of the invention. Moreover, many variations are possible within the scope of the invention, as outlined by the claims.

## Claims

1. Method for assessing the performance of a motion simulator, comprising the steps:
(a) select a performance criterion;
(b) determine a weighing function, representing the sensitivity of an average user for the performance criterion selected in step (a) as function of frequency;
(c) have the motion simulator simulate a motion test signal;
(d) compare the simulated motion produced by the simulator during step (c) with the motion test signal, so as to obtain a deviation signal;
(e) multiply this deviation signal with the weighing function of step (b); and
(f) compute the area underneath the signal obtained from step (e) so as to obtain a performance indicator.

2. Method according to claim 1, wherein the performance criterion is selected from the following group of criteria: motion sickness, motion fidelity, operating fidelity, training fidelity.

3. Method according to claim 1 or 2, wherein the weighing function of step (b) is determined experimentally, with a test setup or with the simulator in question.

4. Method according to anyone of the preceding claims, wherein the weighing function of step (b) is determined by subjecting a number of test persons to a series of motions, comparable to the deviation signal determined in step (d) but with a predetermined frequency content, and by determining the persons' sensitivity for these motions, in view of the selected performance criterion in step (a).

5. Method according to anyone of the preceding claims, wherein the weighing function of step (b) is determined at least partly through mathematical modelling, based on known relations between a certain motion and the human sensitivity therefore.

6. Method according to anyone of the preceding claims, furthermore comprising the step of improving the performance of a simulator, by using information obtained from the weighing function(s), in particular the information regarding the location of frequencies for which the sensitivity is maximum.

7. Method according to claim 6, wherein the motion simulator of which the performance is to be improved comprises a moving base and a filter, said filter having adjustable pass characteristics, so as to bring a control signal to said moving base into accordance with mechanical limitations of said moving base, wherein the improvement step is used to alter the settings of said filter, so as to minimize the occurrence of sensitive frequencies during operation of the moving base.

8. Method according to anyone of the preceding claims, wherein information obtained from the weighing function(s) and/or performance indicator(s) is used to specify desired dynamic behaviour of a simulator, during a design phase of such simulator.

9. Method according to anyone of the preceding claims, wherein information obtained from the weighing function(s) and/or the performance indicator(s) is used to limit the application of a simulator to one or more specific simulation tasks.

10. Method according to anyone of the preceding claims, wherein performance indicators of motion simulators that have been assessed with a method according to anyone of the preceding claims are stored in a database.

11. Performance indicator obtained with a method according to anyone of the preceding claims, wherein the performance indicator is a single value that is representative for the performance of a motion simulator in view of a pre-selected performance criterion.
